# EUROPEAN PATENT SPECIFICATION

(11) **EP 0 687 053 B1**
(45) Date of publication and mention of the grant of the patent: **22.10.1997**
(21) Application number: 94108889.0
(22) Date of filing: 09.06.1994
(51) Int. Cl.: H02K 7/02, G11B 15/28

(54) **An integrated rotary drive apparatus**
Integriertes drehendes Antriebsgerät
Appareil d'entraînement rotatif intégré

(43) Date of publication of application: 13.12.1995
(73) Proprietor: Bayer Corporation, Wilmington, MA 01887-1069 (US)
(72) Inventor: Bellemore, Arthur J., Chelmsford, MA. 01824 (US); Hebert, Thomas K., Groveland, MA. 01834 (US); Larsen, David B., Woburn, MA. 01801 (US)
(74) Representative: Strasse, Joachim, Dipl.-Ing.

(56) References cited:
- WO-A-94/10738
- DE-A- 2 615 109
- DE-U- 7 312 410
- GB-A- 1 445 014
- US-A- 3 790 831
- US-A- 4 079 300
- US-A- 4 420 109

## Description

### BACKGROUND OF THE INVENTION

The present invention relates to rotary drive systems and specifically those rotary drive systems driven by an electric motor which require control refinement by a closed loop electronic feedback system. In particular, the present invention relates to the mechanical design of a rotary drive system having a closed loop electronic feedback controller which varies the torque output from the electric motor for the purpose of rotating a rotatable body in a controlled manner. More specifically, the present invention relates to a rotary drive system according to the preamble of claim 1. Such a rotary drive system is known from US-A-4 079 300.

A controlled rotary drive system typically comprises a mechanical system and a closed loop electronic control system. Such a mechanical system at least includes an electric motor, a rotatable body to be rotated in a controlled manner, a feedback device, e.g. a tachometer or encoder, and at least one shaft connecting and transferring torque from the motor to the rotatable body. In general, the electric motor armature or rotor is mechanically coupled to a motor shaft, hereinafter referred to as the drive shaft, and a first mechanical coupling is used to couple the drive shaft either directly to the body to be rotated in a controlled manner or to a further mechanical coupling which can include a capstan, a belt and pulley, a lead screw or gear coupling connecting the first mechanical coupling and the body to be rotated.

The closed loop electronic control system at least includes, a command signal representative of some desired characteristic of the body to be rotated in a controlled manner, e.g. representing position, velocity or torque, a feedback signal proportional to some parameter being measured by the feedback device, a signal processor for comparing the command signal with the feedback signal, an error signal, generated by the signal processor and an amplifier to amplify the generated error signal.

It is well known in control theory, see e.g. G. Beirnson, PRINCIPLES OF FEEDBACK CONTROL VOLUME 1, Wiley-Interscience Publication, John Wiley & Sons, 1988 pages 10 through 15 and VOLUME 2, 1988 Chapter 10, that the complex ratio of the system feedback signal to the system error signal is defined as the "loop transfer function". Such a loop transfer function is representative of the combined electro-mechanical performance of the loop, and is defined as a phasor having a magnitude equal to the "loop gain" and a phase angle equal to the "loop phase". The loop transfer function provides a quantitative means of indicating the ability of the loop to control the parameters of the body to be controlled. It is also well known that the loop transfer function varies in magnitude and phase as a function of the frequency of the error signal.

In general, it is necessary for a feedback loop to have a loop gain of at least unity in order to have effective control action on the body to be controlled and a phase lag of less than 180° to remain stable. Since loop gain necessarily decreases with increasing frequency, and loop phase necessarily increases with increasing frequency, there exists for every control loop a "gain crossover frequency" above which the loop gain is less than unity and a "phase crossover frequency" above which the loop phase lag is greater than 180°. It therefore follows that an error signal having a frequency below the gain crossover frequency is magnified while, an error signal having a frequency above the gain crossover frequency is attenuated. The "band-width" of a control loop can be defined as the range of frequencies from zero up to the gain crossover frequency. In general it is a goal in control systems to provide maximum gain at low frequencies while at the same time providing maximum loop bandwidth. In addition, it is also a design goal that the loop phase crossover frequency be outside the loop bandwidth. Loop bandwidth is a means of quantifying how quickly the loop can vary the parameters being controlled.

A fundamental problem with the use of feedback control is that feedback can produce oscillations in either the control loop or in the mechanical system under control. Such oscillations occur when the frequency of the feedback signal is equal to or nearly equal to a system resonance frequency, i.e. a frequency where system gain is very large. A particular problem of controlled rotating systems is the excitation of mechanical torsion resonance frequencies of the drive mechanics and especially when these mechanical torsional resonance frequencies fall within the bandwidth of the control loop.

Mechanical oscillations occur as a result of different regions of the mechanical system having different angular positions and phases relative to each other such that some regions actually have opposing velocity vectors. This results in opposing torsional loads winding up the mechanical drive like a spring. The condition can be further reinforced by the control loop which also begins to oscillate at the mechnical torsional resonance frequency in an attempt to regain control. Mechanical resonance conditions can damage the mechanical system and at least result in a breakdown of effective motion control.

In general it is common in motion control systems to overcome mechanical oscillations electrically by the use of a notch filter to attenuate the system response at certain mechanical torsional resonance frequencies. A notch filter for use in motion control systems is described e.g. by B. Kuo and J. Tal in, DC MOTORS AND CONTROL SYSTEMS, SRL Publishing Illinois, 1978 page 125, however such a filter can shift the loop phase crossover frequency inside the loop bandwidth adding electrical oscillation modes which must be otherwise compensated for.

In US Pat. No. 4,507,592, R. Anderson teaches the use of stored motion profiles, stored in read-only memory and selected on the basis of input command signals and used to avoid excitation of certain mechanical resonance frequencies. This method requires prior knowledge of the velocity profiles required and may not account for load variations at the rotating body under control.

In US Pat. No. 4,873,887, A. Rainer et al. teach the use of a torsion-vibration damper which alters the amplitude of mechanical oscillations by reducing system gain at certain torsional resonance frequencies but does not change the frequency of mechanical oscillation.

The parameters governing torsional resonance in a rotary drive system can be very complex, however for a simple shaft, see e.g. DC MOTORS AND CONTROL SYSTEMS by B. Kuo and J. Tal, SRL Publishing Illinois, page 124, its fundamental torsional resonance frequency is determined by the shaft stiffness and its equivalent moment of inertia. According to Kuo and Tal, either an increase in shaft stiffness or a decrease in equivalent moment of inertia can each have the effect of increasing the fundamental torsional resonance frequency of the shaft. Furthermore, shaft stiffness and equivalent moment of inertia are completely determined by the shaft's diameter, shear modulus of elasticity and length. In addition, the shaft diameter plays the most influential role on both parameters. It therefore follows that the fundamental torsional resonance frequency of a rotary drive can be increased by increasing the drive shaft diameter and shortening its length.

Given the fundamentals of controlled rotary drive systems outlined above and given the general goal of increasing control system bandwidth without exciting mechanical resonance frequencies, it is accordingly a general object of the present invention to increase the torsional resonance frequency of a mechanical rotational drive system in order that the closed loop electronic control system bandwidth can be increased.

It is a further object of the present invention to reduce the number of components of a mechanical rotational drive system thereby reducing system cost.

It is a still further object of the present invention to improve the accuracy of the motion feedback system by increasing the rotational drive stiffness such that the feedback device mounted to the drive has an increased response bandwidth.

### SUMMARY OF THE INVENTION

For an integrated rotary drive apparatus according to the preamble of claim 1 the objects of the present invention are solved by the features in the characterizing part of claim 1.

The invention provides a compact, cost reduced integrated rotary drive system having a fundamental torsional resonance frequency which is increased over rotary drives described in the prior art by the use of a larger effective shaft diameter and reduced effective shaft length. In addition, the drive provides mechanical coupling between an electric motor, an inertia flywheel, a feedback device and a driven element without the need for conventional mechanical shaft coupling devices.

The integrated rotary drive comprises, a separable enclosure having ball bearings or bushings mounted therein to support a drive shaft passing therethrough. The separable enclosure includes a first mounting interface for mounting an electric motor thereto and a second mounting interface for mounting the separable enclosure to a frame.

The inertia flywheel and feedback device are mounted to the drive shaft. The electric motor which is mounted to the separable enclosure and the drive shaft rotates the drive shaft, flywheel and feedback device in a manner which can be controlled by a closed loop electronic servo device. The drive shaft can be mechanically coupled to an element to be driven in a controlled manner.

The invention as described can also be constructed without the use of a separable enclosure such that the bearings, drive shaft, feedback device and electric motor are mounted directly to a frame.

### BRIEF DESCRIPTION OF THE DRAWINGS

The objects and features set forth above and other objects and features of the invention will best be understood from a detailed description of a preferred embodiment, selected for the purposes of illustration and shown in the accompanying drawings, in which:
Figure 1 depicts an exploded view of an integrated rotary drive assembly including, a shaftless electric DC motor, an integrated hollow shaft assembly, a mounting frame and a rotatable body to be rotated in a controlled manner, e.g. a capstan;
Figure 2 depicts an exploded view of the shaftless DC motor;
Figure 3 depicts an exploded view of the integrated hollow shaft assembly, including the mounting frame and capstan;
Figure 4 depicts a detailed view of the capstan coupling shaft; and,
Figure 5 is a section view, taken across a plane which passes through the rotational axis, depicting an assembled integrated hollow shaft assembly, a DC motor, a capstan and a capstan coupling shaft mounted to a frame.

### DETAILED DESCRIPTION OF THE INVENTION

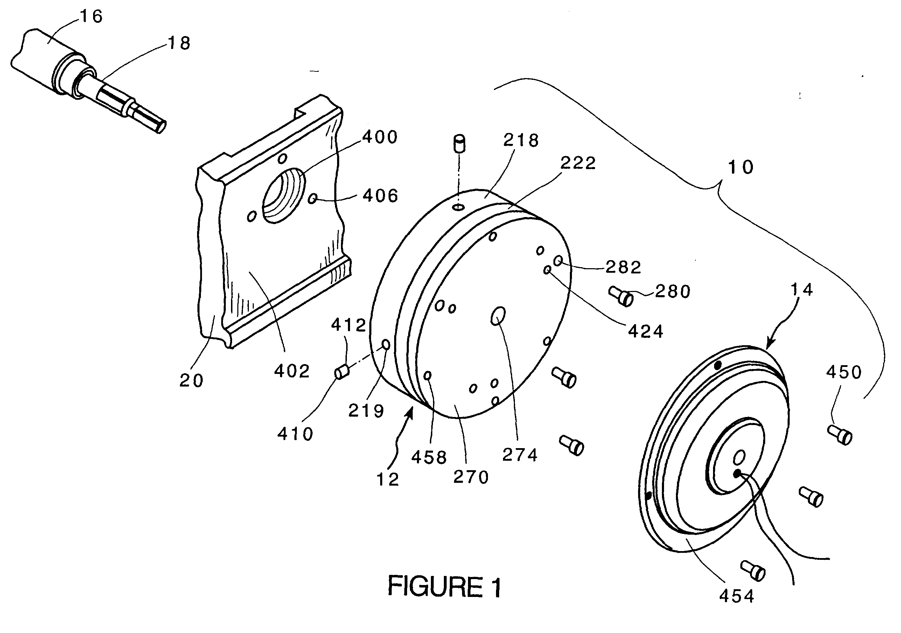

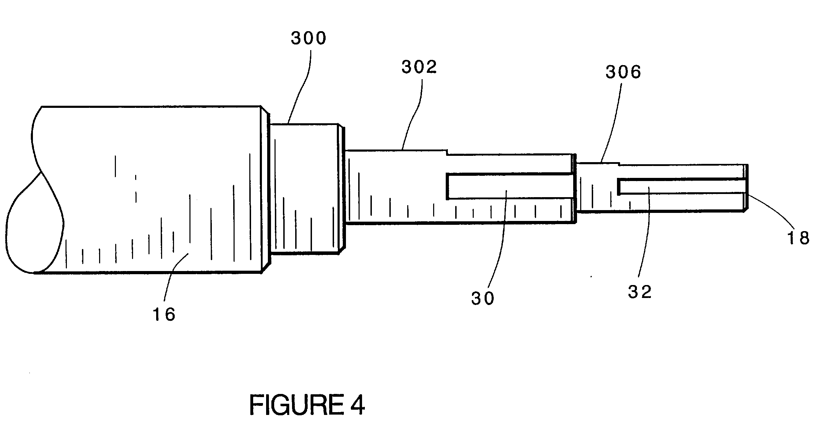

Referring now to Figures 1 through 5, an integrated rotary drive is indicated generally by reference numeral **10**. Drive **10** includes a hollow shaft assembly, indicated generally by reference numeral **12** and a shaftless electric DC motor indicated generally by reference numeral **14**.

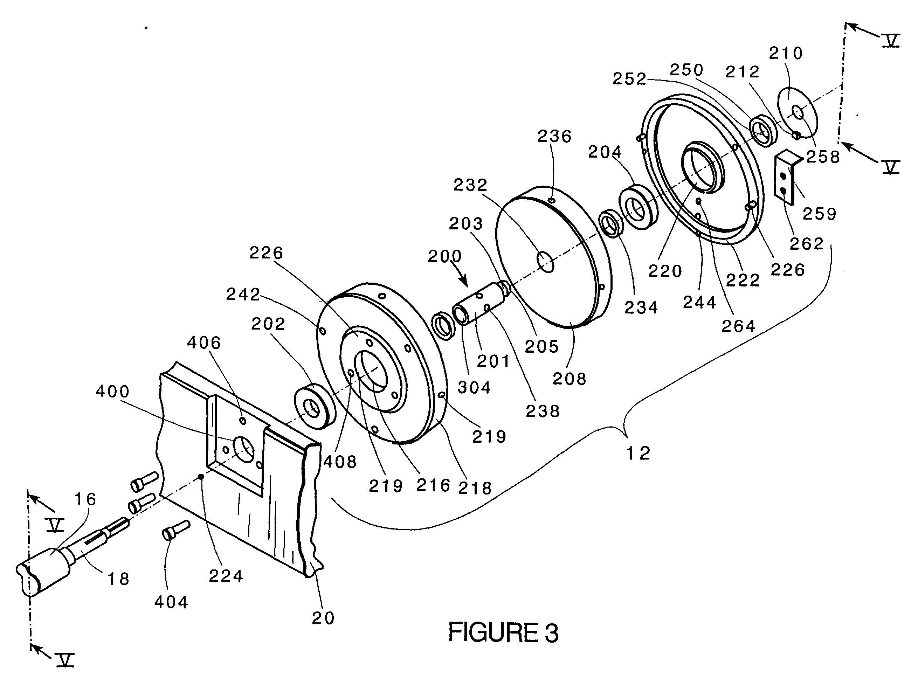

Hollow shaft assembly **12**, shown in Figure 3, comprises a hollow shaft, indicated generally by reference **200** supported at one end by a pilot ball bearing **202** and supported at the other end by a second ball bearing **204**. Ball bearings **202** and **204** are each supported at their outer diameter by a separable enclosure assembly, indicated generally by reference numeral **206**. Hollow shaft assembly **12** further comprises an inertia flywheel **208**, a rotary optical encoder disk **210** and an optical encoder reader **212**. Flywheel **208** and disk **210** each mount to hollow shaft **200**.

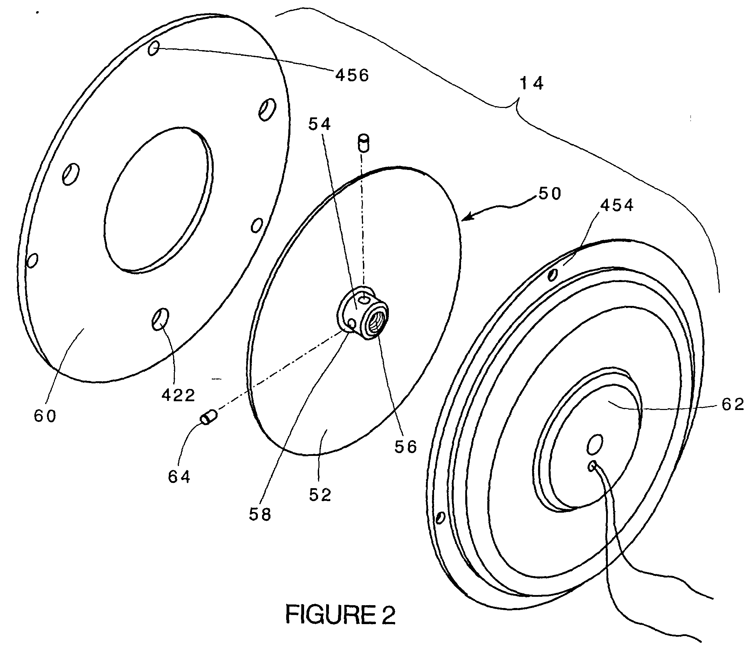

DC motor **14**, shown in Figure 2, comprises a shaft mountable armature assembly, indicated generally by reference numeral **50**, a motor flux plate **60** and a motor stator **62**. The mechanical coupling of assembly **12** motor **14** to capstan **16** will be made evident in subsequent sections.

DC motor **14** is a brushless type DC motor, being controllable by a closed loop electronic servo controller. In particular, it is a kit type DC motor which can be purchased in an unassembled state. Motor **14** includes shaft mountable armature assembly **50** which comprises a motor armature or rotor **52** having an integral shaft mounting hub **54**, attached thereto. Mounting hub **54** includes center bore **56** passing therethrough, the diameter of bore **56** being selected to provide a slight clearance fit with a shaft to be driven. Hub **54** includes two threaded bores **58** each having an axis perpendicular to that of center bore **56** and perpendicular to each other. Threaded bores **58** allow mounting hub **54** to be secured to a driven shaft by set screws **64**. Such a motor is commercially available and is marketed e.g. by PMI MOTORS of Syosset N.Y. under the Part No. 1280035.

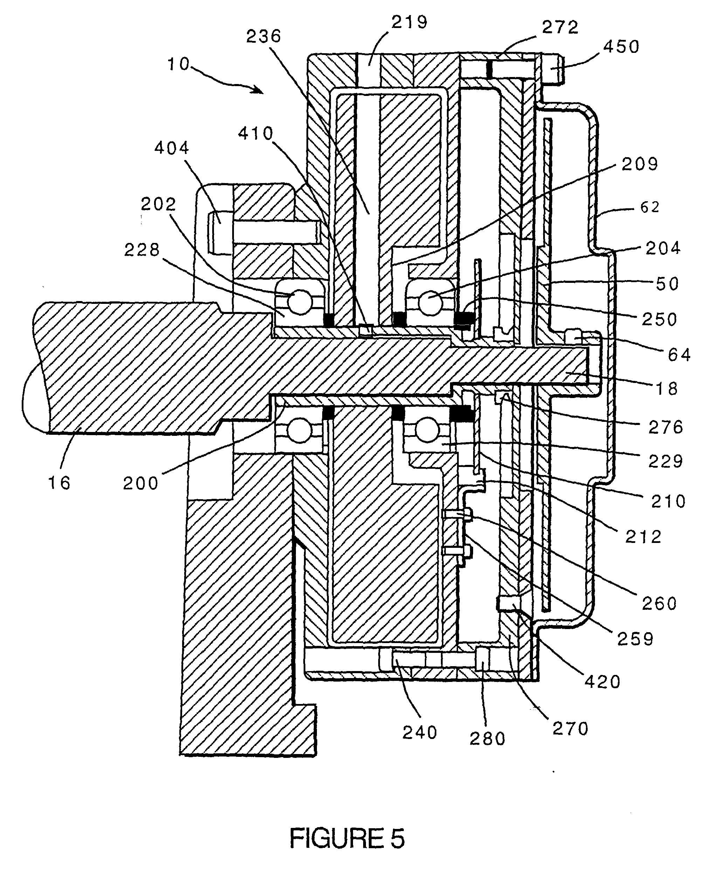

Hollow shaft assembly **12**, shown in exploded view in Figure 3 and shown in section view assembled with capstan **16**, frame **20** and motor **14** in Figure 5, is assembled independently of the drive system and can stand as a self contained unit. Hollow shaft assembly **12** provides the functions of, rotatably supporting one end of capstan **16**, providing a precision mounting interface between hollow shaft **200** and frame **20**, this mounting interface requiring no alignment at assembly, providing a mounting interface for DC motor **14** and providing a mechanical coupling between capstan **16** and flywheel **208** as well as between capstan **16** and optical encoder disk **210**. In addition, assembly **12** provides a mounting interface for optical encoder reader **212**.

Hollow shaft assembly **12** further provides a rotating inertia mass, flywheel **208**, which is an integral feature of the electro-mechanical drive and control system, having the function of providing resistance to drive angular velocity fluctuations, caused e.g. by loading variations at capstan **16** or by current variations at DC motor **14**. In addition, optical encoder disk **210** when aligned with encoder reader **212** provides electronic feedback to the closed loop electronic control system. The feedback comprises an electronic signal representative of angular position and velocity of hollow shaft **200**. The feedback signal is used to control the output torque of DC motor **12** providing motion control of capstan **16**. Such rotary encoder devices are commercially available and marketed e.g. by COMPUTER OPTICAL PRODUCTS of Chatsworth, CA.

A detailed description and assembly method for hollow shaft assembly **12** is described below and is best illustrated by Figure 3. Hollow shaft **200** is a stepped hollow shaft having a largest outside diameter **201**, an encoder disk interface diameter **203**, a dust seal interface diameter **205** and an internal diameter **304**.

Pilot ball bearing **202** is pressed onto hollow shaft **200** at diameter **201** such that the shaft and bearing edges are flush.

Bearing **202** is also bonded to shaft **200** using a shaft locking adhesive. Such locking adhesives are commercially available and marketed e.g. by LOKTITE INC.

Separable enclosure **206**, having two sections, has a through bore **216** passing through first enclosure section **218** and a counterbored bore **219**, being bored from the side of frame mounting face **226**. Counterbore **219** has a depth which is slightly less than the width of ball bearing **202**. A second through bore **220** passes through second enclosure section **222** and has the same diameter as counter bore **219**. Separable enclosure **206** is constructed such that through bore **220**, through bore **216** and counterbore **219** all have a common axis **224**. Axis **224** is also the rotation axis of the drive system. Alignment pins **226** are included in second enclosure section **222** to align through bores **216** and **220** and counterbore **219** along common axis **224** upon assembly of first enclosure section **218** with second enclosure section **222**.

Counterbore **219** has a diameter consistent with providing a slight press fit with the outside diameter of ball bearings **202** while through bore **220** has a diameter consistent with providing a slight clearance fit with the outside diameter of bearing **204**. Through bore **216** has a diameter less than that of counterbore **219** but no less than the diameter of inner ball bearing race **228**, (see Figure 5).

Pilot bearing **202**, now assembled to hollow shaft **200** is installed into counterbore **219** such that hollow shaft **200** passes through bore **216**. Bearing **202** is pressed in place such that it contacts the shoulder formed between through bore **216** and counterbore **219**. Pilot bearing **202** thus protrudes beyond first enclosure frame mounting surface **226** since the depth of counter bore **219** is less than the width of ball bearing **202**. The protrusion of pilot bearing **202** is used to guide hollow shaft assembly **12** onto frame **20** in a later step.

Shaft spacer has an annular shape with an internal diameter consistent with providing a clearance fit with hollow shaft diameter **201** and an external diameter no larger than the outside diameter of ball bearing inner race **228**. Spacer is installed onto shaft **200** providing a separation between bearing **202** and flywheel **208**.

Flywheel **208**, is a circular disk having a circular recess **209** near its center, (see Figure 5) the purpose of which is to reduce the length of hollow shaft **200** by providing space for ball bearing **204**. Flywheel **208** includes a center bore **232** passing therethrough, bore **232** having a diameter consistent with a light press fit with hollow shaft diameter **201**. Flywheel **208** also includes two access holes **236**, the purpose of which is to provide access to hollow shaft threaded bores **238**, the purpose of which will be detailed in a later section. Flywheel access holes **236** as well as hollow shaft threaded bores **238** each have an axis perpendicular to rotation axis **224** and perpendicular to each other. Flywheel **208** is pressed onto hollow shaft diameter **201** in an orientation which aligns the axes of access holes **236** and threaded bores **238**. The width of spacer is selected to establish the alignment of holes **236** with threaded bores **238** when flywheel **208** is pressed tightly against it. Flywheel **208** is also bonded with a shaft locking adhesive. A second shaft spacer **234**, comparable to spacer **230**, is installed onto shaft **200** providing separation between flywheel **208** and second ball bearing **204**.

Bearing **204**, being comparable to bearing **202**, is pressed and bonded onto hollow shaft **200** at diameter **201** such that it seats against spacer **234**. Separable enclosure assembly **206** is then assembled and a preload is applied to bearings **202** and **204** to remove radial play between the inner and outer bearing races. To apply the bearing preload, a shaft bonding adhesive is applied to the external diameter of ball bearing **204**. Second enclosure section **222** is then assembled with first enclosure section **218** such that alignment pins **226** align the two halves. Threaded fasteners **240** are installed into first enclosure section counterbored clearance holes **242** and engaged with second enclosure section threaded bores **244**.

To preload the ball bearings **202** and **204**, opposing forces are applied to the outer races of ball bearings **202** and **204** until the shaft bonding adhesive has cured. The preload allows the two ball bearings to act like a duplex bearing pair providing increased radial and axial stiffness when compared to a single bearing or an unpreloaded dual bearing mount. This increased stiffness is desirable for accurate angular position and velocity feedback from rotary encoder disk and reader **210** and **212**. The preload force employed is consistent with ball bearing manufacturers recommendations, e.g. a force of 12 pounds.

Optical encoder disk hub **250** has a stepped annular shape with a smallest internal diameter **252** consistent with providing a press fit with hollow shaft diameter **201** and a larger internal diameter **254** having a purpose of removing material to provide a narrow annular mounting interface with optical encoder disk **210**. The outside diameter of hub **250** is no larger than the outside diameter of ball bearing inner race **228**.

Optical encoder disk **210** is a thin circular disk having typical features of an optical encoder disk such features being well known in the art. Disk **210** includes a center hole **258** having a diameter consistent with a slight clearance fit with hollow shaft diameter **203**. Disk **210** is installed onto hollow shaft diameter **203** and bonded with hub **250** such that the disk features are concentric with and perpendicular to system rotation axis **224**.

Optical encoder reader assembly **212** is secured to adjustment bracket **259**. Bracket **259** mounts to second enclosure section **224** in an adjustable manner. Threaded fasteners **260** pass through adjustment bracket clearance holes **262** and engage with second enclosure section threaded bores **264** to clamp the bracket in place. Optical reader **212** can be adjusted for optimum performance by slightly loosening fasteners **260** and rotating disk **210** while observing the encoder electronic output signal. Such encoder alignment techniques are well known. In another embodiment of the present invention the optical encoder reader assembly **212** is positioned within the separable enclosure **206**.

Dust cover **270** has a circular disk shape with a rib **272** at its outermost diameter and a center bore **274** passing therethrough. Center bore **274** has a diameter which is consistent with providing a clearance fit with hollow shaft diameter **205** but not larger than the sealing diameter of shaft seal **276**. Shaft seal **276** has the purpose of preventing contaminants from entering the optical encoder enclosure and has an internal mounting diameter which mates with hollow shaft diameter **205**. Such shaft seals are readily available commercially. Rib **272** has a depth dimension which ensures a sealing engagement of shaft seal **276** with dust cover **270**. Dust cover **270** is assembled to second enclosure **222** with threaded fasteners **280**. Fasteners **280** are installed into dust cover counterbored holes **282** and engage with second enclosure threaded bores **244** providing a clamping force for assembly.

Hollow drive assembly **12** as described above is completely assembled and ready for mounting onto a rotary system. To couple capstan 16 with hollow shaft assembly **12** and with DC motor armature assembly **50**, coupling shaft **18**, machined onto capstan **16**, provides certain coupling features. This coupling is described below.

Coupling shaft **18** has a first diameter **300** which is greater than hollow shaft internal diameter **304** but not larger than the outside diameter of ball bearing inner race **228**. Diameter **300** has the purpose of seating against ball bearing **202**. Coupling shaft diameter **302** provides a mechanical coupling with hollow shaft assembly **12** and has a dimension consistent with providing a very slight clearance fit with hollow shaft internal diameter **304**. Coupling shaft diameter **306** provides a mechanical coupling with DC motor armature hub **54** and has a diameter consistent with providing a very slight clearance fit with armature hub center bore **56**.

To assembly the drive system, capstan **16** is first installed such that coupling shaft **18** passes through frame through bore **400**. In general this need not be the first step however for the present invention, capstan **16** must be installed first due to other mounting constraints. Frame through bore **400** has a diameter consistent providing slight clearance fit with the outside diameter of pilot bearing **202**. Frame through bore **400** is used to align the rotational axis of drive assembly **10** with the rotational axis of capstan **16**. Frame mounting face **402** provides a seating surface for hollow drive assembly mounting face **226** and must be machined perpendicular to the axis of through bore **400**.

Hollow shaft assembly **12** is guided over coupling shaft **18** such that shaft **18** passes through hollow shaft **200**. Pilot bearing **202** is guided into frame through bore **400**. Threaded fasteners **404** install through frame clearance holes **406** and engage with first separable enclosure threaded bores **408** to provide a clamping force to secure hollow shaft assembly **12** to frame **20**.

To mechanically couple hollow shaft **200** with coupling shaft **18**, flywheel **208** is rotated to a position which aligns flywheel access holes **236** with first enclosure access holes **219**. Capstan **16** is rotated to a position which aligns the normal axis of two coupling shaft flats **30** with the axis of hollow shaft threaded bores **238**. Flats **30** machined on coupling shaft **18** having a normal axis perpendicular to rotation axis **224** and perpendicular to each other. Threaded set screws **410** having a flat clamping face **412** are installed through assess holes **219** and **236** and engaged with threaded bores **238** providing a clamping force against flat **30**. This clamping action forces coupling shaft **18** against hollow shaft inside diameter **304** providing mechanical coupling of capstan **16** with flywheel **208** and encoder disk **210**.

To install DC motor **14**, motor flux plate **60** is mounted to dust cover **270** by threaded fasteners **420**, (see Figure 5). Fasteners **420** are installed through flux plate countersunk clearance holes **422**, (see Figure 2) and engage with dust cover threaded bores **424**, (see Figure 1).

Armature assembly **50** is guided onto coupling shaft **18** over diameter **306** placing the armature **52** toward flux plate **60**. Shims are used during assembly to provide the correct spacing between armature **52** and flux plate **60**, per the motor manufacturers specifications.

Hub **54** is rotated to a position which aligns the normal axis of two coupling shaft flats **32** with the axis of threaded bores **58**. Flats **32** machined on coupling shaft **18** having a normal axis perpendicular to rotation axis **224** and perpendicular to each other. Threaded set screws **64** having a flat clamping face are engaged with threaded bores **58** providing a clamping force against flats **32**. This clamping action forces armature hub **54** against coupling shaft **18** providing a mechanical coupling between motor armature **52** and capstan **16**.

Motor stator **62** is installed onto dust cover **270** using threaded fasteners **450**. Fasteners **450**, (see Figures 1 and 2) pass through stator clearance holes **454** and flux plate clearance holes **456** and engage with dust cover threaded bores **458** providing a clamping force for mounting.

The drive assembly **10** as described above is mechanically coupled to capstan **16** and mounted to frame **20**. Electronic connections, not shown, provide current to DC motor **12** and access a feedback signal from encoder reader **212**. A current applied to stator **62** causes armature **50** to rotate due to electromagnetic forces set up therebetween. Armature **50** now mechanically coupled to coupling shaft **18**, rotates shaft **18** which is mechanically coupled to hollow shaft **200** thus further rotating flywheel **208**, encoder disk **210** and capstan **16**. In addition, whatever devices which may be mechanically coupled to capstan **16** are rotated as well. Under closed loop electronic control, the rotational motion can be controlled.

The specific features of the present invention which increase the fundamental torsional resonance frequency of drive **10** over prior drive systems are due mainly to the effective increase in shaft diameter which occurs when hollow shaft **200** is coupled with coupling shaft **18**. In addition, the reduction in shaft length which results from fitting bearing **204** within recess **209** of flywheel **208** also increases shaft stiffness. A further increase in system stiffness results from mounting encoder disk **210** between motor **14** and capstan **16** since prior drives place the encoder on the opposite side of motor **14** thus lengthening coupling shaft **18**. In addition, the use of two preloaded ball bearings increases system stiffness eliminating potential low frequency torsional resonances. Finally, a conventional motor to encoder drive shaft coupling has been eliminated by the present invention by coupling all systems directly to capstan **16** through coupling shaft **18**. This feature eliminates torsional resonance problems which are well known and occur when using conventional, e.g. flexible mechanical drive shaft couplings.

Other modifications can also be made without departing from the scope of the invention as defined in the following claims. What we claim and desire to secure by Letters of Patent of the European Patent Office are the following:

## Claims

1. An integrated rotary drive apparatus (10) comprising:
(a) a rotatable shaft means (200) having a longitudinal, rotational axis;
(b) first (202) and second (204) bearing means for supporting said rotatable shaft means (200) in a rotatable manner;
(c) an inertia flywheel (208) mounted to said rotatable shaft (200);
(d) rotary motion indicating means (210);
(e) means for coupling said rotatable shaft means (200) to a driven element (16);
(f) electrical motor means (14) for driving said rotatable shaft means (200), said inertia flywheel (208), said rotary motion indicating means (210) and said driven element (16), said electrical motor means (14) having a rotor (50) and a stator (62) that is nonrotationally fixed with respect to a frame member (20) when the first (202) and second (204) bearing means are mounted with respect to said frame member (20);
(g) means for mounting said first (202) and second (204) bearing means with respect to said frame member (20); and,
(h) means (212) responsive to said rotary motion indicating means (210), said responsive means (212) being non-rotationally fixed with respect to the frame member (20) when said first (202) and second (204) bearing means are mounted with respect to said frame member (20);
characterized in that
said rotatable shaft means (200) has a hollow portion extending for at least the distance along its longitudinal, rotational axis between and including said first (202) and second (204) bearing means;
said driven element (16) includes a rotatable shaft portion (18) positioned within the hollow portion of said rotatable shaft means (200), whereby said driven element rotatable shaft portion (18) extends beyond the hollow portion of said rotatable shaft means (200);
said rotor (50) of said electrical motor means (14) is secured with respect to the extension of said driven element rotatable shaft portion (18); and
said inertia flywheel (208) is mounted to said rotatable shaft means (200) at a position between said first (202) and second (204) bearing means.

2. The integrated rotary drive apparatus according to claim 1 wherein said rotary motion indicating means (210) is mounted to said rotatable shaft means (200).

3. The integrated rotary drive apparatus according to claim 1 or 2 characterized by further comprising:
a separable enclosure means (206) having a first enclosure section (218) with a first bore (216) therethrough and a second enclosure section (222) with a second bore (220) therethrough, said first (218) and second (222) enclosure sections having registration means (226) for aligning said first (216) and second (220) through bores along a common axis.

4. The integrated rotary drive apparatus according to claim 3 wherein
said rotatable shaft means (200) passes through said first (216) and second (220) through bores.

5. The integrated rotary drive apparatus according to claim 4 wherein
said first (202) and second (204) bearing means are mounted within said first (216) and second (220) through bores.

6. The integrated rotary drive apparatus according to one of claims 3 to 5 further comprising means (404) for mounting said separable enclosure means (206) to said frame member (20).

7. The integrated rotary drive apparatus according to one of claims 3 to 6 wherein said inertial flywheel (208) is mounted to said rotatable shaft means (200) so that it is positioned within said separable enclosure means (206).

8. The integrated rotary drive apparatus according to one of claims 3 to 7 wherein said rotary motion indicating means (210) is positioned within said separable enclosure means (206).

9. The integrated rotary drive apparatus according to one of claims 3 to 8 wherein said means (212) responsive to said rotary motion indicating means (210) is positioned within said separable enclosure means (206).

## Patentansprüche

1. Integrierte Drehantriebsvorrichtung (10) mit:
(a) einer drehbaren Wellenvorrichtung (200) mit einer Längsdrehachse;
(b) einer ersten (202) und einer zweiten Lagervorrichtung (204) zum drehbaren Lagern der drehbaren Wellenvorrichtung (200);
(c) einem an der drehbaren Welle (200) befestigten Trägheits-Schwungrad (208);
(d) einer Anzeigevorrichtung (210) für die Drehbewegung;
(e) einer Vorrichtung zum Koppeln der drehbaren Wellenvorrichtung (200) mit einem angetriebenen Element (16);
(f) einer Elektromotorvorrichtung (14) zum Antrieb der drehbaren Wellenvorrichtung (200), des Trägheits-Schwungrads (208), der Anzeigevorrichtung (210) für die Drehbewegung und des angetriebenen Elements (16), wobei die Elektromotorvorrichtung (14) einen Rotor (50) sowie einen Stator (62) hat, welcher nichtdrehbar an einem Rahmenglied (20) befestigt wird, wenn die erste (202) und die zweite Lagervorrichtung (204) am Rahmenglied (20) angebracht werden;
(g) einer Vorrichtung zur Anbringung der ersten (202) und der zweiten Lagervorrichtung (204) am Rahmenglied (20); und
(h) einer auf die Anzeigevorrichtung (210) für die Drehbewegung ansprechende Vorrichtung (212), wobei die Ansprechvorrichtung (212) nichtdrehbar am Rahmenglied (20) befestigt wird, wenn die erste (202) und die zweite Lagervorrichtung (204) am Rahmenglied (20) angebracht werden;
dadurch gekennzeichnet, daß
die drehbare Wellenvorrichtung (200) einen hohlen Abschnitt aufweist, der sich zumindest über die Strecke zwischen und einschließlich der ersten (202) und der zweiten Lagervorrichtung (204) entlang ihrer Längsdrehachse erstreckt;
wobei das angetriebene Element (16) einen drehbaren Wellenabschnitt (18) aufweist, der sich im Inneren des hohlen Abschnitts der drehbaren Wellenvorrichtung (200) befindet, wodurch der drehbare Wellenabschnitt (18) des angetriebenen Elements über den hohlen Abschnitt der drehbaren Wellenvorrichtung (200) hinaus verläuft;
wobei der Rotor (50) der Elektromotorvorrichtung (14) an der Verlängerung des drehbaren Wellenabschnitts (18) des angetriebenen Elements befestigt ist; und
das Trägheits-Schwungrad (208) an der drehbaren Wellenvorrichtung (200) an einer Stelle zwischen der ersten (202) und der zweiten Lagervorrichtung (204) befestigt ist.

2. Integrierte Drehantriebsvorrichtung nach Anspruch 1, wobei die Anzeigevorrichtung (210) für die Drehbewegung an der drehbaren Wellenvorrichtung (200) befestigt ist.

3. Integrierte Drehantriebsvorrichtung nach Anspruch 1 oder 2, weiterhin gekennzeichnet durch:
eine abtrennbare Umschließungsvorrichtung (206) mit einem ersten Umschließungsabschnitt (218) mit einer ersten, durch diesen hindurchgehenden Bohrung (216) und einem zweiten Umschließungsabschnitt (222) mit einer zweiten, durch diesen hindurchgehenden Bohrung (220), wobei der erste (218) und der zweite Umschließungsabschnitt (222) eine Vorrichtung (226) für die Lagegenauigkeit aufweisen, um die erste (216) und die zweite durchgehende Bohrung (220) entlang einer gemeinsamen Achse auszurichten.

4. Integrierte Drehantriebsvorrichtung nach Anspruch 3, wobei
die drehbare Wellenvorrichtung (200) durch die erste (216) und die zweite (220) durchgehende Bohrung hindurch verläuft.

5. Integrierte Drehantriebsvorrichtung nach Anspruch 4, wobei
die erste (202) und die zweite Lagervorrichtung (204) innerhalb der ersten (216) bzw. der zweiten durchgehenden Bohrung (220) angeordnet sind.

6. Integrierte Drehantriebsvorrichtung nach einem der Ansprüche 3 bis 5, weiterhin gekennzeichnet durch:
eine Vorrichtung (404) zur Befestigung der abtrennbaren Umschließungsvorrichtung (206) am Rahmenglied ((20).

7. Integrierte Drehantriebsvorrichtung nach einem der Ansprüche 3 bis 6, wobei das Trägheits-Schwungrad (208) derart auf der drehbaren Wellenvorrichtung (200) gelagert ist, daß es sich innerhalb der abtrennbaren Umschließungsvorrichtung (206) befindet.

8. Integrierte Drehantriebsvorrichtung nach einem der Ansprüche 3 bis 7, wobei die Anzeigevorrichtung (210) für die Drehbewegung innerhalb der abtrennbaren Umschließungsvorrichtung (206) angeordnet ist.

9. Integrierte Drehantriebsvorrichtung nach einem der Ansprüche 3 bis 8, wobei die auf die Anzeigevorrichtung (210) für die Drehbewegung ansprechende Vorrichtung (212) innerhalb der abtrennbaren Umschließungsvorrichtung (206) angeordnet ist.

## Revendications

1. Appareil d'entraînement en rotation intégré (10) comprenant :
(a) un arbre rotatif (200) ayant un axe de rotation longitudinal;
(b) un premier palier (202) et un second palier (204) pour supporter à rotation l'arbre rotatif (200);
(c) un volant d'inertie (208) monté sur l'arbre rotatif (200);
(d) un moyen (210) indiquant un mouvement de rotation;
(e) un moyen pour accoupler l'arbre rotatif (200) à un élément entraîné (16);
(f) un moteur électrique (14) pour entraîner l'arbre rotatif (200), le volant d'inertie (208), le moyen (210) indiquant un mouvement de rotation et l'élément entraîné (16), ce moteur électrique (14) comportant un rotor (50) et un stator (62) qui est fixé de manière à ne pas pouvoir tourner par rapport à un élément de bâti (20) lorsque le premier palier (202) et le second palier (204) sont montés par rapport à l'élément de bâti (20);
(g) un moyen pour monter le premier palier (202) et le second palier (204) par rapport à l'élément de bâti (20) et
(h) un moyen (212) répondant au moyen (210) indiquant un mouvement de rotation, ce moyen (212) étant fixé de manière à ne pas pouvoir tourner par rapport à l'élément de bâti (20) lorsque le premier palier (202) et le second palier (204) sont montés par rapport à l'élément de bâti (20);
caractérisé en ce que l'arbre rotatif (200) comporte une portion creuse s'étendant, le long de son axe de rotation longitudinal, sur au moins la distance comprise entre les premier et second paliers (202,204) et incluant ces paliers, l'élément entraîné (16) comporte une portion d'arbre rotatif (18) disposée dans la portion creuse de l'arbre rotatif (200) de telle façon que la portion d'arbre rotatif (18) de l'élément entraîné s'étende au-delà de la portion creuse de l'arbre rotatif (200), le rotor (50) du moteur électrique (14) est fixé par rapport à l'extension de la portion d'arbre rotatif (18) de l'élément entraîné, et le volant d'inertie (208) est monté sur l'arbre rotatif (200) dans une position située entre le premier palier (202) et le second palier (204).

2. Appareil d'entraînement en rotation intégré suivant la revendication 1 caractérisé en ce que le moyen (210) indiquant un mouvement de rotation est monté sur l'arbre rotatif (200).

3. Appareil d'entraînement en rotation intégré suivant l'une quelconque des revendications 1 ou 2 caractérisé en ce qu'il comprend en outre une enveloppe séparable (206) comportant une première section d'enveloppe (218) présentant un premier alésage (216) à travers elle et une seconde section d'enveloppe (222) présentant un second alésage (220) à travers elle, la première section d'enveloppe (218) et la seconde section d'enveloppe (222) comportant des moyens de concordance (226) pour aligner le premier alésage (216) et le second alésage (220) suivant un axe commun.

4. Appareil d'entraînement en rotation intégré suivant la revendication 3 caractérisé en ce que l'arbre rotatif (200) passe à travers le premier alésage (216) et le second alésage (220).

5. Appareil d'entraînement en rotation intégré suivant la revendication 4 caractérisé en ce que le premier palier (202) et le second palier (204) sont montés dans le premier alésage (216) et dans le second alésage (220).

6. Appareil d'entraînement en rotation intégré suivant l'une quelconque des revendications 3 à 5 caractérisé en ce qu'il comprend en outre un moyen (404) pour monter l'enveloppe séparable (206) sur l'élément de bâti (20).

7. Appareil d'entraînement en rotation intégré suivant l'une quelconque des revendications 3 à 6 caractérisé en ce que le volant d'inertie (208) est monté sur l'arbre rotatif (200) de telle façon qu'il soit situé à l'intérieur de l'enveloppe séparable (206).

8. Appareil d'entraînement en rotation intégré suivant l'une quelconque des revendications 3 à 7 caractérisé en ce que le moyen (210) indiquant un mouvement de rotation est situé à l'intérieur de l'enveloppe séparable (206).

9. Appareil d'entraînement en rotation intégré suivant l'une quelconque des revendications 3 à 8 caractérisé en ce que le moyen (212) répondant au moyen (210) indiquant un mouvement de rotation est situé dans l'enveloppe séparable (206).
